# EUROPEAN PATENT SPECIFICATION

(11) **EP 3 555 183 B1**
(45) Date of publication and mention of the grant of the patent: **28.10.2020**
(21) Application number: 17826352.1
(22) Date of filing: 12.12.2017
(51) Int. Cl.: C08J 7/04, C09D 7/40, C08L 67/02

(54) **ARTICLE WITH HARDCOAT**
ARTIKEL MIT HARTBESCHICHTUNG
ARTICLE DOTÉ D'UN REVÊTEMENT DUR

(30) Priority: 19.12.2016 US 201662436032 P
(43) Date of publication of application: 23.10.2019
(73) Proprietor: 3M Innovative Properties Company, Saint Paul, Minnesota 55133-3427 (US)
(72) Inventor: HATTORI, Jiro, Tokyo 141-8684 (JP); SUGIYAMA, Naota, Tokyo 141-8684 (JP)
(74) Representative: Gabriel, Kiroubagaranne
(86) International application number: PCT/US2017/065731
(87) International publication number: WO 2018/118510

(56) References cited:
- WO-A1-2015/171340
- WO-A1-2016/036507
- WO-A2-2014/022368

## Description

### Background

A variety of coatings and films are used to protect windows (e.g., building and automobile windows) and optical displays (e.g., as cathode ray tube (CRT) and light emitting diode (LED) displays).

Additional options for protecting windows and optical displays are desired, particularly those having relatively good or better hardness, weatherability, and optical properties (e.g., visibility) at the same time

WO 2015/171340 A1 relates to an article comprising a substrate and a hardcoat; the hardcoat comprises a binder and nanoparticles having an average particle diameter in a range of 2-100 nm, wherein the ratio of average particle diameters of nanoparticles having an average particle diameter in the range from 2-20 nm to average particle diameters of nanoparticles having an average particle diameter in the range from 20 nm to 100 nm is in a range from 1:2 to 1:200.

WO 2016/036507 A1 relates to a hardcoat comprising binder and nanoparticles in a range of 15-95 volume %; 10-40 volume % of the nanoparticles have an average particle diameter in a range of 2-30 nm and 20-60 volume % of the nanoparticles have an average particle diameter in a range of 50-100 nm, based on the total volume of the hardcoat.

WO 2014/022368 A2 relates to an anti-reflective hard coat containing a nanoparticle mixture and a binder. The nanoparticles constitute from 40-95 mass % of an entire mass of the anti-reflective hard coat; 10-50 mass % of the nanoparticles have an average particle size within a range of 2-200 nm; and 50-90 mass % of the nanoparticles have an average particle size within a range of 60-400 nm. A ratio of the average particle size of nanoparticles having an average particle size within the range of 60-400 nm to the average particle size of nanoparticles having an average particle size within a range of 2-200 nm is from 2:1 to 200:1.

### Summary

In one aspect, the present disclosure provides an article comprising, in order:
a substrate;
a hardcoat comprising:
   a binder; and
   a mixture of nanoparticles in a range from 60 wt.% to 90 wt.%, based on the total weight of the hardcoat, wherein a range from 10 wt.% to 50 wt.% (in some embodiments, in a range from 15 wt.% to 45 wt.%, or even from 20 wt.% to 40 wt.%) of the nanoparticles comprise a first group of nanoparticles having an average particle diameter in a range from 2 nm to 200 nm (in some embodiments, in a range from 2 nm to 150 nm), and in a range from 50 wt.% to about 90 wt.% (in some embodiments, in a range from 55 wt.% to 85 wt.%, or even from 60 wt.% to 80 wt.%) of the nanoparticles comprise a second group of nanoparticles having an average particle diameter in a range from 60 nm to 400 nm (in some embodiments, in a range from 70 nm to 300 nm), based on the total weight of nanoparticles in the hardcoat, and having a ratio of the average particle size of the first group of nanoparticles to the average particle size of the second group of nanoparticles are in a range from 1:2 to 1:200 (in some embodiments, 1:2.5 to 1:100);
a layer comprising SiOₓC_{y}, where 0<x<2 and 0<y<1; and
a hydrophilic layer.

Embodiments of articles described herein typically have good transparency and hardness, and are useful, for example, for optical displays (e.g., cathode ray tubes (CRT) and light emitting diode (LED) displays), personal digital assistants (PDAs), cell phones, liquid crystal display (LCD) panels, touch-sensitive screens, removable computer screens, window films, and goggles.

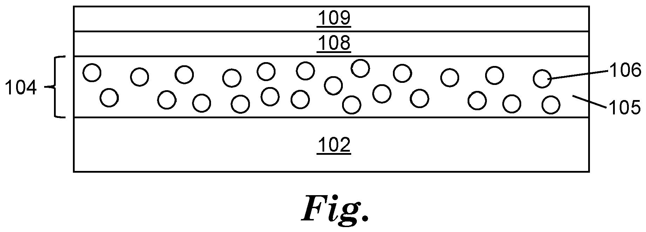

### Brief Description of the Drawing

The FIG. is a schematic of a side view of an exemplary article described herein.

### Detailed Description

Referring to the FIG., article 100 comprising, in order, substrate 102, hardcoat 104, layer 108, and hydrophilic layer 109. Hardcoat 104 compries binder 105 and nanoparticles 106. Layer 108 comprises SiOₓC_{y}, where 0<x<2 and 0<y<1.

### -Substrates

Exemplary substrates for having the hardcoat described herein thereon include a film, a polymer plate, a sheet glass, and a metal sheet. The film may be transparent or non-transparent. As used herein "transparent" refers that total transmittance is 90% or more and "untransparent" refers that total transmittance is less han 90%. Exemplary films includes those made of polycarbonate, poly(meth)acrylate (e.g., polymethyl methacrylate (PMMA)), polyolefins (e.g., polypropylene (PP)), polyurethane, polyesters (e.g., polyethylene terephthalate (PET)), polyamides, polyimides, phenolic resins, cellulose diacetate, cellulose triacetate, polystyrene, styrene-acrylonitrile copolymers, acrylonitrile butadiene styrene copolymer (ABS), epoxies, polyethylene, polyacetate and vinyl chloride, or glass. The polymer plate may be transparent or non-transparent. Exemplary polymer plates include those made of polycarbonate (PC), polymethyl methacrylate (PMMA), styrene-acrylonitrile copolymers, acrylonitrile butadiene styrene copolymer (ABS), a blend of PC and PMMA, or a laminate of PC and PMMA. The metal sheet may be flexible or rigid. As used herein, "flexible metal sheet" refers to metal sheets that can undergo mechanical stresses (e.g., bending or stretching) without significant irreversible change. "Rigid metal sheet" refers to metal sheets that cannot undergo mechanical stresses (e.g., bending or stretching) without significant irreversible change. Exemplary flexible metal sheets include those made of aluminum. Exemplary rigid metal sheets include those made of aluminum, nickel, nickel-chrome, and stainless steel. When metal sheets are used, it may be desirable to apply a primer layer between the hardcoat and the substrate.

Typically, the thickness of the film substrate is in a range from about 5 micrometers to about 500 micrometers. Typically the thickness for a polymer plate is in a range from about 0.5 mm to about 10 mm (in some embodiments, from about 0.5 mm to about 5 mm, or even about 0.5 mm to about 3 mm). For sheet glass or metal sheet as the substrate, the typical thickness is in a range from about 5 micrometers to about 500 micrometers (in some embodiments, about 0.5 mm to about 10 mm, about 0.5 mm to about 5 mm, or even about 0.5 mm to about 3 mm). Thickness outside of these ranges may also be useful.

### -Optional Primer

In some embodiments, the substrate includes a primer such that a primer layer is between the substrate and the hardcoat layer. Substrates having a primer layer thereon are commercially available. For example, a primed polyethylene terephthalate (PET) substrate is available under trade desisnation "LUMIRROR U32" from Toray Industries, Inc., Tokyo, Japan; and "COSMOSHINE" from Toyobo Co., Ltd., Tokyo, Japan.

Techniques for applying the primer precursor (solution) to the surface of the substrate are known in the art, and include bar coating, dip coating, spin coating, capillary coating, spray coating, gravure coating, and screen printing. The coated pimer precursor can be dried and cured by polymerization methods known in the art such as ultraviolet (UV) or thermal polymerization.

### -Binder

The amount of binder in the precursor to form the hardcoat is typically sufficient to provide the hardcoat with binder present in a range from 10 wt.% to 40 wt.%, based on the total weight of the hardcoat.

Exemplary binders include at least one of cured (meth)acrylic oligomer or monomer. Exemplary binders such as trifunctional aliphatic urethane acrylate are available, for example, from Daicel-Allnex, Ltd., under the trade designation "EBECRYL 8701."

In some embodiments, the binder (and hardcoat) comprise at least one silicone (meth)acrylate additive (e.g., polydimethylsiloxane (PDMS) having at least one of an acrylate, (meth)acrylate, hydroxyl, glycidyl, carbonyl, amino, or (m)ethoxy group). For example, the silicone (meth)acrylate additive is present in an amount in a range from 0.01 wt.% to 10 wt.%, based on the total weight of the hardcoat layer.

### -Nanoparticles

Exemplary nanoparticles include at least one of SiO₂ nanoparticles, ZnO nanoparticles, ZrO₂ nanoparticles, indium-tin-oxide (ITO) nanoparticle or antimony-doped tin oxide (ATO) nanoparticles. Suitable nanoparticles are known in the art and include SiO₂, which is available, for example, under trade designation "NALCO 2327" from Nalco Company, Naperville, IL; and ZnO, which is available, for example, under trade designation"NANOBYK3820" from BYK Japan KK, Tokyo, Japan; ZrO₂, which is available, for example, under the trade designation "BAILAR Zr-C20" from Taki Chemical, Ltd., Hyogo, Japan; indium-tin oxide, which is available, for example, under the trade designation "PI-3;" from Mitsubishi Materials Electronic Chemicals Co., Ltd., Akita, Japan; and antimony doped tin oxide, which is available, for example, under the trade designation "549541" from Sigma-Aldrich Co. LLC, St. Louis, MO.

In general, the nanoparticles themselves (i.e., absent any coating) have a particle size in a range from about 2 nm to 400 nm (in some embodiments, 2 nm to 300 nm). The average diameter of nanoparticles is measured with transmission electron microscopy (TEM) using commonly employed techniques in the art. For measuring the average particle size of nanoparticles, sol samples can be prepared for TEM imaging by placing a drop of the sol sample onto a 400 mesh copper TEM grid with an ultra-thin carbon substrate on top of a mesh of lacey carbon (available from Ted Pella Inc., Redding, CA). Part of the drop can be removed by touching the side or bottom of the grid with filter paper. The remainder can be allowed to dry. This allows the particles to rest on the ultra-thin carbon substrate and be imaged with less interference from a substrate. TEM images can be recorded at multiple locations across the grid. Enough images are recorded to allow sizing of 500 to 1000 particles. The average diameters of the nanoparticles can then be calculated based on the particle size measurements for each sample. TEM images can be obtained using a high resolution transmission electron microscope (available under the trade designation "HITACHI H-9000" from Hitachi, Tokyo, Japan) operating at 300KV (with a LaB₆ source). Images can be recorded using a camera (e.g., Model No. 895, 2k X 2k chip available under the trade designation "GATAN ULTRASCAN CCD" from Gatan, Inc., Pleasanton, CA). Images can be taken, for example, at a magnification of 50,000X and 100,000X. For some samples, images may be taken at a magnification of 300,000X.

### -Hardcoat Layer

A hardcoat precursor can be prepared by combining components using techniques known in the art, such as adding curable monomers and/or oligomers in solvent (e.g., methyl ethyl ketone (MEK) or 1-methoxy-2-propanol (MP-OH)) with an inhibitor to solvent. In some embodiments, depending, for example, on the curable monomers and/or oligomers used, a solvent-free (i.e., organic solvent free, or 100% water) process may be used to form the coatings.

In some embodiments, two or more different sized nanoparticle sols, with or without modification, may be mixed with curable monomers and/or oligomers in solvent with an initiator to furnish a hardcoat precursor. The desired weight % in solid of the hardcoat precursor can be adjusted by adding the solvent.

Optionally, the hardcoat may further include known additives such as an anti-fog agent, an antistatic agent, and an easy clean agent (e.g., an anti-fingerprinting agent, an anti-oil agent, an anti-lint agent, an anti-smudge agent, or other agents adding an easy-cleaning function).

Inclusion of silicon polyether acrylate (available, for example, under the trade designation "TEGORAD 2250" from Evonic Goldschmidt GmbH, Essen, Germany) in the hardcoat may also improve the easy-clean function of the hardcoat. Exemplary amounts of silicon polyether acrylate include in a range from about 0.01 wt.% to about 5.0 wt.% (in some embodiments, about 0.05 wt.% to about 1.5 wt.%, or even about 0.1 wt.% to about 0.5 wt.%), based on the total weight of the hardcoat.

Techniques for applying the hardcoat precursor (solution) to the surface of the substrate are known in the art, and include bar coating, dip coating, spin coating, capillary coating, spray coating, gravure coating, and screen printing. The coated hardcoat precursor can be dried and cured by polymerization methods known in the art such as ultraviolet (UV) or thermal polymerization.

For those substrates having more than one surface, a hardcoat may be disposed on more than one surface of the substrate,. Also, more than one hardcoat layer may be applied to a surface.

Typically, the hardcoat layer has a thickness up to 100 micrometers (in some embodiments, up to 50 micrometers, or even up to 10 micrometers; in some embodiments, in a range from 1 micrometer to 50 micrometers, or even 1 micrometer to 10 micrometers).

### -SiOₓC_{y} Layer

The layer comprising SiOₓC_{y} can be provided, for example, via plasma-enhanced chemical vapor deposition (PECVD), wherein the plasma is formed, for example, from 1,1,3,3-tetramethyldisiloxane (TMDSO) and oxygen gas, or hexamethyledisiloxane (HMDSO) and oxygen gas.

The plasma density is the calculated power (e.g., RF (13.56 MHz) applied per unit area of the electrode). In some embodiments, plasma density is greater than 0.1 W/cm² (in some embodiments, greater than 0.2 W/cm² or even 0.23 W/cm²).

Plasma dose is the plasma density per resident time. In some embodiement, the plasma dose range is in a range from 1 Joule/cm² to 15 Joule/cm² (in some embodiments, 4 Joule/cm² to 10 Joule/cm²).

In some embodiments, the layer comprising SiOₓC_{y} has a thickness up to 5 micrometers (in some embodiments, in a range 5 nm to 5 micrometer; 10 nm to 500 nm, 25 nm to 500 nm, 25 nm to 250 nm, or even 50 nm to 150 nm).

In some embodiments, the layer comprising SiOₓC_{y} is amorphous. In some embodiments, the layer comprising SiOₓC_{y} is hydrophilic. The degree of hydrophilicity is observed to change based on the ratio of Si:O:C. In some embodiments, the layer comprising SiOₓC_{y} has a water contact angle not greater than 40 degrees (in some embodiments, not greater than 35 degrees, 30 degrees, 25 degrees, or even 20 degrees) as measured by the "Water Contact Angle Determination" in the Examples.

In some embodiments, the layer comprising SiOₓC_{y} has a haze value less than 3% as determined by the "Haze Test" described in the Examples. In some embodiments, the layer comprising SiOₓC_{y} has a 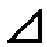 haze value less than 0.2% as determined by the "Haze Test" described in the Examples.

### -Hydrophilic Layer

Exemplary materials for preparing a hydrophilic composition for providing the hydrophilic layer include at least one of alcoxy silane or zwitter ionic alcoxy silane in water. Hydrophilic materials are commercially available, for example, under the trade designation "LAMBIC 400EP" from Osaka Organic Chemical Industry, Ltd., Osaka, Japan. In some embodiments the hydrophilic material (e.g., alcoxy silane) is present in a range from 0.001 wt.% to 40 wt.% (in some embodiments, in a range from 0.001 wt.% to 30 wt.%, 0.001 wt.% to 20 wt.%, 0.001 wt.% to 10 wt.%, 0.5 wt.% to 5 wt.%, or even 1 wt.% to 4 wt.%), based on the total weight of the hydrophilic composition. In some embodiments, the hydrophilic layer comprises a silane coupling agent having at least one of zwitterionic or polyethylene glycol (PEG) functionality.

Techniques for applying the hydrophilic composition to the surface of the layer comprising SiOₓC_{y} are known in the art, and include bar coating, dip coating, spin coating, capillary coating, spray coating, gravure coating, and screen printing. The coated hydrophilic composition can be dried and cured with hydrolysis and condensation reaction.

In some embodiments, the hydrophilic layer has a thickness up to 1 micrometer (in some embodiments, in a range from 5 nm to 1 micrometer, 5 nm to 500 nm, 5 nm to 100 nm, or even 5 nm to 20 nm).

In some embodiments, the hydrophilic layer has an outer surface, and the outer surface has a 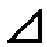 haze in range from -1.0 to 1.0 as determined by the "Haze Test" described in the Examples.

In some embodiments, the hydrophilic layer has an outer surface, wherein the outer surface has an "OK" of easy clean performance as determined by the "Easy Clean Test" described in the Examples.

In some embodiments, the hydrophilic layer has an outer surface, wherein the outer surface has an "OK" for anti-fogging performance as determined by the "Anti-Fogging Test" described in the Examples.

### -Optional Adhesive Layer

Optionally, an adhesive layer may be applied on the opposite surface of the substrate having the hardcoat layer thereon. Exemplary adhesives are known in the art, and include acrylic adhesive, urethane adhesive, silicone adhesive, polyester adhesive, and rubber adhesive.

Further, if an adhesive layer is present, optionally a liner (e.g., release liner) is included over the adhesive layer. Release liners are known in the art and include paper and a polymer sheet.

Artilces described herein are useful, for example, for optical displays (e.g., cathode ray tube (CRT), light emitting diode (LED) displays), plastic cards, lenses, camera bodies, fans, door knobs, tap handles, mirrors, and home electronics (e.g., washing machines), and for optical displays (e.g., cathode ray tube (CRT) and light emitting diode (LED) displays), personal digital assistants (PDAs), cell phones, liquid crystal display (LCD) panels, touch-sensitive screens, removable computer screens, window films, and goggles. Further, the hardcoat described herein may be useful, for example, for furniture, doors and windows, toilet bowls and bath tubs, vehicle interiors/exteriors, camera lenses and glasses, and solar panels.

### -Exemplary Embodiments

1A. An article comprising, in order:
   a substrate;
   a hardcoat comprising:
      a binder; and
      a mixture of nanoparticles in a range from 60 wt.% to 90 wt.%, based on the total weight of the hardcoat, wherein a range from 10 wt.% to 50 wt.% (in some embodiments, in a range from 15 wt.% to 45 wt.%, or even from 20 wt.% to 40 wt.%) of the nanoparticles comprise a first group of nanoparticles having an average particle diameter in a range from 2 nm to 200 nm (in some embodiments, in a range from 2 nm to 150 nm), and in a range from 50 wt.% to about 90 wt.% (in some embodiments, in a range from 55 wt.% to 85 wt.%, or even from 60 wt.% to 80 wt.%) of the nanoparticles comprise a second group of nanoparticles having an average particle diameter in a range from 60 nm to 400 nm (in some embodiments, in a range from 70 nm to 300 nm), based on the total weight of nanoparticles in the hardcoat, and having a ratio of the average particle size of the first group of nanoparticles to the average particle size of the second group of nanoparticles are in a range from 1:2 to 1:200 (in some embodiments, 1:2.5 to 1:100);
   a layer comprising SiOₓC_{y}, where 0<x<2 and 0<y<1; and
   a hydrophilic layer.
2A. The article of Exemplary Embodiment 1A, wherein the substrate comprises one of a film, a polymer plate, a glasssheet, and a metal sheet.
3A. The article of any preceding A Exemplary Embodiment, further comprising a primer layer between the substrate and the hardcoat layer.
4A. The article of any preceding A Exemplary Embodiment, wherein the binder comprises at least one of cured (meth)acrylic oligomer or monomer.
5A. The article of any preceding A Exemplary Embodiment, wherein the binder is present in a range from 5 wt.% to 60 wt.%, based on the total weight of the hardcoat.
6A. The article of any preceding A Exemplary Embodiment, wherein the hardcoat comprises at least one silicone (meth)acrylate additive (e.g., polydimethylsiloxane (PDMS) acrylate).
7A. The article of Exemplary Embodiment 6A, wherein the at least one silicone (meth)acrylate additive is present in an amount in a range from 0.01 wt.% to 10 wt.%, based on the total weight of the hardcoat layer.
8A. The article of any preceding A Exemplary Embodiment, wherein the nanoparticles are at least one of SiO₂ nanoparticles, ZnO nanoparticles, ZrO₂ nanoparticles, indium-tin-oxide (ITO) nanoparticles or antimony-doped tin oxide (ATO) nanoparticles.
9A. The article of any preceding A Exemplary Embodiment, wherein the hardcoat layer has a thickness up to 100 micrometers (in some embodiments, up to 50 micrometers, or even up to 10 micrometers; in some embodiments, in a range from 1 micrometer to 50 micrometers, or even 1 micrometer to 10 micrometers).
10A. The article of any preceding A Exemplary Embodiment, wherein the layer comprising SiOₓC_{y} is amorphous.
11A. The article of any preceding A Exemplary Embodiment, wherein the layer comprising SiOₓC_{y} is hydrophilic.
12A. The article of any preceding A Exemplary Embodiment, wherein the layer comprising SiOₓC_{y} has a water contact angle not greater than 40 degrees (in some embodiments, not greater than 35 degrees, 30 degrees, 25 degrees, even 20 degrees) as determined by the Water Contract Angle Determination described in the Examples.
13A. The article of any preceding A Exemplary Embodiment, wherein the layer comprising SiOₓC_{y} has a haze value less than 3% as determined by the Haze Test described in the Examples.
14A. The article of Exemplary Embodiment 13A, wherein the layer comprising SiOₓC_{y} has a 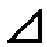 haze value less than 0.2% as determined by the Haze Test described in the Examples.
15A. The article of any preceding A Exemplary Embodiment, wherein the hydrophilic layer has an outer surface, and wherein said outer surface has a 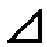 haze in range from -1.0 to 1.0 as determined by the Haze Test described in the Examples.
16A. The article of any preceding A Exemplary Embodiment, wherein the layer comprising SiOₓC_{y} has a thickness up to 5 micrometers (in some embodiments, in a range 5 nm to 5 micrometers, 10 nm to 500 nm, 25 nm to 500 nm, 25 nm to 250 nm, or even 50 nm to 150 nm).
17A. The article of any preceding A Exemplary Embodiment, wherein the hydrophilic layer comprises a silane coupling agent having at least one of zwitterionic or polyethylene glycol (PEG) functionality.
18A. The article of any preceding A Exemplary Embodiment, wherein the hydrophilic layer has a thickness up to 1 micrometer (in some embodiments, in a range from 5 nm to 1 micrometer, 5 nm to 500 nm, 5 nm to 100 nm, or even 5 nm to 20 nm).
19A. The article of any preceding A Exemplary Embodiment passing the Easy Clean Test described in the Examples.
20A. The article of any preceding A Exemplary Embodiment passing the Anti-Fogging Test described in the Examples.
1B. A method of making the article of any preceding A Exemplary Embodiment comprising:
   providing a substrate with the hardcoat thereon, and in turn, the layer comprising SiOₓC_{y}; on the hardcoat; and
   applying the hydrophilic layer on the layer comprising SiOₓC_{y}.
2B. The method of Exemplary Embodiment 1B, further comprising, providing the layer comprising SiOₓC_{y} via plasma-enhanced chemical vapor deposition (PECVD), wherein the plasma is formed from 1,1,3,3-tetramethyldisiloxane (TMDSO) and oxygen gas, or hexamethyledisiloxane (HMDSO) and oxygen gas.
3B. The method of any preceding B Exemplary Embodiment, further comprising, providing the hardcoat layer via:
   depositing a layer comprising uncured binder and a mixture of nanoparticles in a range from 60 wt.% to 90 wt.%, based on the total weight of the hardcoat, wherein a range from 10 wt.% to 50 wt.% (in some embodiments, in a range from 15 wt.% to 45 wt.%, or even from 20 wt.% to 40 wt.%) of the nanoparticles comprise a first group of nanoparticles having an average particle diameter in a range from 2 nm to 200 nm (in some embodiments, in a range from 2 nm to 150 nm), and in a range from 50 wt.% to about 90 wt.% (in some embodiments, in a range from 55 wt.% to 85 wt.%, or even from 60 wt.% to 80 wt.%) of the nanoparticles comprise a second group of nanoparticles having an average particle diameter in a range from 60 nm to 400 nm (in some embodiments, in a range from 70 nm to 300 nm), based on the total weight of nanoparticles in the hardcoat, and having a ratio of the average particle size of the first group of nanoparticles to the average particle size of the second group of nanoparticles are in a range from 1:2 to 1:200 (in some embodiments, 1:2.5 to 1:100); and
   curing the binder.
4B. The method of Exemplary Embodiment 3B, wherein the uncured binder comprises at least one silicone (meth)acrylate additive (e.g., polydimethylsiloxane (PDMS) acrylate).
5B. The method of Exemplary Embodiment 4B, wherein the at least one silicone (meth)acrylate additive is present in an amount in a range from 0.01 wt.% to 10 wt.%, based on the total weight of the hardcoat layer.
6B. The method of any of Exemplary Embodiments 3B to 5B, further comprising, providing the hydrophilic layer via depositing a hydrophilic composition comprising alcoxy silane.
7B. The method of Exemplary Embodiment 6B, wherein the alcoxy silane is present in a range from 0.001 wt.% to 40 wt.% (in some embodiments, in a range from 0.001 wt.% to 30 wt.%, 0.001 wt.% to 20 wt.%, 0.001 wt.% to 10 wt.%, 0.5 wt.% to 5 wt.%, or even 1 wt.% to 4 wt.%), based on the total weight of the hydrophilic composition.
8B. The method of either Exemplary Embodiment 6B or 7B, wherein the hydrophilic composition further comprises at least one of water or an alcohol (e.g., ethanol).
9B. The method of Exemplary Embodiments 6B to 8B, wherein the composition further comprises a silane coupling agent having at least one of zwitterionic or polyethylene glycol (PEG) functionality.
Advantages and embodiments of this invention are further illustrated by the following examples, but the particular materials and amounts thereof recited in these examples, as well as other conditions and details, should not be construed to unduly limit this invention. Unless otherwise noted, all parts, percentages, ratios, etc., in the Examples and the rest of the specification are by weight.

### Test Methods

### Pencil Hardness Test

The pencil hardness of the samples prepared according to the Examples and Comparative Examples was determined according to JIS K 5600-5-4 (1999), the disclosure of which is incorporated herein by reference. The test was run by rubbing the samples with pencil leads of varying hardnesses (from softest to hardest) at a 45-degree angle under an applied load of 750 grams and determining the highest pencil hardness a sample survived, without scratching. The pencil hardness tester used for this method was obtained under trade designation "NO. 431 PENCIL SCRATCH HARDNESS TESTER" from Toyo Seiki Seisaku-Sho, Ltd., Tokyo, Japan.

### Adhesion Test

Adhesion performance of the samples prepared according to the Examples and Comparative Examples was evaluated by a cross-cut test according to JIS K5600-5-6 (1999), the disclosure of which is incorporated herein by reference. Adhesion test assesses the resistance of a coating to separation from the substrate. First, a right angle lattice pattern (a 5×5 grid with 1 mm of interval grid (i.e., 25 one mm by one mm squares)) was cut into the coating penetrating through to the substrate. An adhesive tape (obtained under the trade designation "NICHIBAN CT24" from Nitto Denko Co., Ltd., Osaka, Japan) was adhered over the lattice and then pulled off at a right angle. Presence/absence of cracks on the lattice was then determined by using an optical microscope. A lack of cracking (or presence of only a few cracks), is an indication of more desirable or improved flexibility and adherence. The results are reported as the number of squares lacking cracks out of the 25 cut in the sample and a tape.

### Optical Properties Tests

The optical properties such as clarity, haze, and percent transmittance (TT) of the samples prepared according to the Examples and Comparative Examples were measured by using a haze meter (obtained under the trade designation "NDH5000W" from Nippon Denshoku Industries Co., Ltd, Tokyo, Japan). Optical properties were determined on as-prepared samples (i.e., initial optical properties) and after subjecting the samples to steel wool abrasion resistance testing. The "Haze Test" compared the difference in haze values before and after subjecting the samples to steel wool abrasion resistance testing.

### Steel Wool Abrasion Resistance Test

The scratch resistance of the samples, prepared according to the Examples and Comparative Examples, was evaluated by the surface changes after the steel wool abrasion test using 2.7×2.7 cm² head area with #0000 steel wool after 20 cycles at 500 grams load and at 60 cycles/min. rate. The strokes were 85 mm long. The instrument used for the test was an abrasion tester (obtained under the trade designation "IMC-157C" from Imoto Machinery Co., Ltd., Kyoto Japan). The optical properties (percent transmittance, haze, and 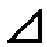 Haze (i.e., haze after abrasion test minus initial haze)) were measured again using the method described above.

The presence of scratches was rated as described in Table 1, below.

**Table 1**

| Observation | Rating |
|---|---|
| No scratches | 0 |
| A few very faint scratches, only observed in reflection | 1 |
| Several faint scratches | 2 |
| Several faint scratches, a few deep scratches | 3 |
| Large number of deep scratches, easily observed in reflected or transmitted light. Almost complete removal of coating. | 4 |

### Water Contact Angle (CA) Determination

The water contact angle of a surface of the samples, prepared according to the Examples and Comparative Examples, was measured by sessile drop method using a contact angle meter (obtained under the trade designation "DROPMASTER FACE" from Kyowa Interface Science Co., Ltd., Saitama, Japan). The contact angle was measured from an optical photograph image after 2.0 microliters of water were dropped on the surface. The value of contact angle was calculated from the average of 5 measurements.

### Easy Clean Test

The easy clean performance of the samples, prepared according to the Examples and Comparative Examples, was evaluated by removing or attempting to remove an ink mark (made from a marker obtained under the trade designation "MACKEE EXTRA FINE MO-120-MC-BK" from Zebra, Co., Ltd., Tokyo, Japan) using a wet cotton ball. The wet cotton ball was swiped back and forth, up to five times, over the ink mark under moderate manual force. The easy clean performance of the samples was then determined by visual inspection and rated based on the following criteria:
OK: Hardly any ink mark was observed after the wet cotton wipe. An OK means the sample passed the test.
NG: The ink mark was still observed after the wet cotton wipe.

### Anti-Fogging Test

The anti-fogging performance of the samples, prepared according to the Examples and Comparative Examples, was evaluated by the visual inspection as follows. 450 mL of water was added into 500 mL conical flask. The temperature of the water was controlled to 60°C. The sample tested was held 10 cm above the water level in the flask. Then, the time until fogging up of the sample was observed.

The anti-fogging performance was rated with the following criteria:
OK: The sample did not fog for at least 60 seconds. An OK means the sample passed the test.
NG: The sample fogged in less than 60 seconds.

### Preparation of Surface Modified Silica Sol-1

5.95 grams of 3-methacryloxypropyl-trimethoxysilane (obtained under trade designation "SILQUEST A-174" from Alfa Aesar, Ward Hill, MA,) and 0.5 gram of 4-hydroxy- 2,2,6,6-tetramethylpiperidine 1-oxyl (5 wt.%; obtained under trade designation "PROSTAB" from Aldrich Chemical Company, Milwaukee, WI) was added to a mixture of 400 grams of 75 nm diameter SiO₂ sol (obtained under trade designation "NALCO 2329" from Nalco Company, Naperville, IL) and 450 grams of 1-methoxy-2-propanol (obtained from Sigma-Aldrich Co., LLC, St. Louis, MO) in a glass jar with stirring at room temperature for 10 minutes. The jar was sealed and placed in an oven at 80°C for 16 hours. The water was removed from the resultant solution with a rotary evaporator at 60°C until the solid content of the solution was about 45 wt.%. 200 grams of 1-methoxy-2-propanol was charged into the resultant solution, and the remaining water removed using the rotary evaporator at 60°C. This latter step was repeated for a second time to further remove water from the solution. Sufficient amount of 1-methoxy-2-propanol was added to the sol to provide a SiO₂ sol containing 45.0 wt.% of surface modified SiO₂ nanoparticles with an average size of 75 nm ("Sol-1").

### Preparation of Surface Modified Silica Sol-2

25.25 grams of 3-methacryloxypropyl-trimethoxysilane ("SILQUEST A-174") and 0.5 gram of 4-hydroxy- 2,2,6,6-tetramethylpiperidine 1-oxyl (5 wt.%; "PROSTAB") was added to a mixture of 400 grams of 20 nm diameter SiO₂ sol (obtained under trade designation "NALCO 2327" from Nalco Company) and 450 grams of 1-methoxy-2-propanol in a glass jar with stirring at room temperature for 10 minutes. The jar was sealed and placed in an oven at 80°C for 16 hours. The water was removed from the resultant solution with a rotary evaporator at 60°C until the solid content of the solution was about 45 wt %. 200 grams of 1-methoxy-2-propanol was charged into the resultant solution, and the remaining water removed by using the rotary evaporator at 60°C. This latter step was repeated for a second time to further remove water from the solution. Sufficient amount of 1-methoxy-2-propanol was added to the sol to provide a SiO₂ sol containing 45.0 wt.% of surface modified SiO₂ nanoparticles with an average size of 20 nm ("Sol-2").

### Preparation of Hardcoat Precursor Solution HC-1

42.98 grams of Sol-1, 23.14 grams of Sol-2, 8.93 grams of trifunctional aliphatic urethane acrylate (obtained from under trade designation "EBECRYL 8701" from Daicel-Allnex, Ltd. Tokyo, Japan) and 0.99 gram of 1,6-hexanediol diacrylate (obtained under trade designation "SARTOMER SR238NS" from Arkema Americas, Clear Lake, TX) were mixed. 0.79 gram of 1-[4-(2-hydroxyethoxy)-phenyl]-2-hydroxy-2-methyl-1-propane-1-one (obtained under trade designation "IRGACURE 2959" from BASF Japan Ltd., Tokyo, Japan) as the photoinitiator and 0.02 gram of acrylated poly dimethyl siloxane (PDMS) (obtained under trade designation "TEGORAD 2250" from Evonik Industries, Essen, Germany) was added to the mixture. The mixture was adjusted to 40.49 wt.% in solid by adding 19.84 grams of metylisobutyl ketone (obtained from obtained from Sigma-Aldrich Co., LLC) and 3.31 grams of 1-methoxy-2-propanol (obtained from Sigma-Aldrich Co., LLC) to prepare the hardcoat precursor solution ("HC-1").

### Coating and Curing of Hardcoat Layer

A 100-micrometer thick polyethylene terephthalate (PET) film (obtained under trade designation"LUMIRROR U34" from Toray Industries, Inc., Tokyo, Japan) was used as a substrate. HC-1 hardcoat precursor solution was roll-to- roll (R2R) coated onto the PET film using gravure coating line equipped with a 2-inch (5 cm) diameter gravure coating roll. The gravure coating roll had 130 grooves per lineal inch (51 grooves per lineal cm) and was operated at a wiping ratio of 180%. The HC-1 hardcoat precursor solution (40.49 wt.% solids) was filtered in-line using a filter (obtained under the trade designation "HT-40EY ROKI" from Roki Techno Co., Ltd., Tokyo, Japan). The coating was first cured by passing the sample through an oven equipped with three heating zones. The temperature of the three heating zones (zones 1, 2, and 3) of the oven were set to 87°C, 85°C, and 88°C, respectively. Note that the actual measured temperatures for heating zones 1, 2 and 3 inside the oven were 59°C, 67°C, and 66°C, respectively. Each of the heating zones (zones 1, 2 and 3) of the oven was fitted with a fan. The fans for zones 1, 2 and 3 were set to operate at 30 Hz, 40 HZ, and 40 Hz, respectively. Then the coating was ultraviolet (UV) cured under N₂ atmosphere (N₂ gas having an O₂ content of 120-240 ppm) using a Fusion UV curing system equipped with an H-bulb (240 W/cm power; obtained under trade designation "HERAEUS/FUSION UV F600 SERIES" from Heraeus Noblelight America, LLC, Buford, GA). Line speed through the UV curing system was fixed at 6 meters per minute and the UV power was set at 40% output. The web tension was 20, 24, 19 and 20 N (for a 250-mm web) at unwinder, input, oven, winder, respectively. For the unwinder and winder, 3-inch (7.5 cm) diameter roll cores were used.

### Plasma Deposition

A (R2R) plasma deposition system was used for deposition of SiOₓ on the coated polymer films. The system included an aluminum vacuum chamber that contained two roll shape electrodes with chamber walls acting as the counter electrode. Because of the larger surface area of the counter electrode, the system was considered to be asymmetric, resulting in large sheath potential at the powered electrode, around which the substrate film to be coated was wrapped. The chamber was pumped by pumping system, which included dual turbo-molecular pumps backed by a mechanical pump. Process gases were metered through mass flow controllers and blended in a manifold before they were introduced into the chamber. The process gases, oxygen, and hexamethyldisiloxane (obtained under the trade designation "HMDSO" from Iwatani Corporation, Tokyo, Japan) were stored remotely in gas cabinets and piped to the mass flow controller. The plasma was powered by a 13.56MHz-10500W radio frequency power supply (obtained under the trade designation "MKS SPECTRUM" (Model B-10513) from MKS Instruments, Inc., Andover, MA) through an impedance matching network (Model MWH-100, obtained from MKS Instruments, Inc.). The hard coated substrate described above was treated by R2R plasma equipment using one of the conditions described in Table 2, below. The mixed gases of hexamethyldisiloxane ("HMDSO") and oxygen provided the resulting SiOₓ layer on the hardcoat layer.

**Table 2**

| Condition | Process Gas | | RF condition | | Web Speed, m/min. | Vaccum Pressure | | Plasma Condition | |
|---|---|---|---|---|---|---|---|---|---|
| | hexamethyldisiloxane, sccm | Oxygen, sccm | Power, Watts | Frequency, MHz | | Base, Pa | Process, Pa | Dose, Joule/cm² | Power Density, Watt/cm² |
| | | | | | | | | | |
| 1 | 60 | 2,398 | 6,000 | 13.56 | 3.05 | 0.16 | 5.47 | 14.6 | 0.23 |
| 2 | 60 | 2,396 | 6,000 | 13.56 | 9.15 | 0.16 | 5.51 | 4.9 | 0.23 |
| 3 | 60 | 2,397 | 5,000 | 13.56 | 9.15 | 0.16 | 5.00 | 4.1 | 0.19 |
| 4 | 60 | 2,397 | 4,000 | 13.56 | 9.15 | 0.16 | 5.55 | 3.3 | 0.19 |

### Example 1 (EX-1)

EX-1 was prepared as follows. HC-1 was coated on a 100-micrometer thick PET film ("LUMIRROR U34") and cured as decribed above (see "Coating and Curing of Hardcoat Layer"), resulting in a PET film having a 3-micrometer thick (dry) nanoparticle-filled hardcoat. The hardcoated substrate was treated by using the R2R plasma equipment (see "Plasma Deposition") with process condition #2, in Table 2 (above).

The plasma deposited film was fixed on a soda lime glass plate with a size of 50 mm × 150 mm × 3 mm. 5 wt.% of a hydrophilic silane (obtained under trade designation "LAMBIC 400EP" from Osaka Organic Chemical Industry, Ltd., Osaka, Japan) was applied as a hydrophilic topcoat by applied on to the plasma-deposited hardcoat film substrate. The hydrophilic topcoat was coated using a Mayer Rod # 4, and dried for 10 minutes at 100°C in air.

### Example 2 (EX-2)

EX-2 was prepared as described for EX-1, except plasma condition #3, in Table 2 (above), was used.

### Example 3 (EX-3)

EX-3 was prepared as described for EX-1, except plasma condition #4, in Table 2 (above), was used.

### Comparative Example 1 (CE-1)

CE-1 was a bare 100-micrometer thick PET film ("LUMIRROR U34").

### Comparative Example 2 (CE-2)

CE-2 was prepared as follows. A 100-micrometer thick PET film ("LUMIRROR U34") was treated with the R2R plasma equipment using the plasma condition #1, in Table 2 (above). No nanoparticle-filled hardcoat was applied. Finally, a hydrophilic silane layer ("LAMBIC 400EP") was deposited and dried as decribed above (see EX-1).

The resulting CE-1, CE-2, and EX-1 to EX-3 samples were tested using methods described above. The results are summarized in Table 3, below.

**Table 3**

| | Initial Properties | | | | | | | After Steelwool Abrastion Test (500 grams, 20 cycles, 2.7×2.7cm², #0000) | | | | | |
|---|---|---|---|---|---|---|---|---|---|---|---|---|---|
| | Pencil Hardness at 750 grams | Adhesion | Optical Propeties | | Easy Clean | Anti-fog | CA, degrees | | | | | | |
| | | | TT, % | Haze | | | | TT, % | Haze | 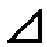 Haze | Easy Clean | Anti-fog | CA, ° |
| CE-1 | H | - | 92.28 | 0.58 | NG | NG | 69.1 | 91.73 | 11.50 | 10.92 | NG | NG | 65.6 |
| CE-2 | H | 25/25 | 93.07 | 0.49 | OK | OK | 16.2 | 91.67 | 15.94 | 15.45 | NG | NG | 54.4 |
| EX-1 | 3H | 25/25 | 92.55 | 0.52 | OK | OK | 15.5 | 92.38 | 0.66 | 0.14 | OK | OK | 9.2 |
| EX-2 | 3H | 25/25 | 92.01 | 0.60 | OK | OK | 15.9 | 92.31 | 0.56 | -0.04 | OK | OK | 9.6 |
| EX-3 | 3H | 25/25 | 92.04 | 0.59 | OK | OK | 15.8 | 82.48 | 0.63 | 0.04 | OK | OK | 9.5 |

## Claims

1. An article comprising, in order:
a substrate;
a hardcoat comprising:
a binder; and
a mixture of nanoparticles in a range from 60 wt.% to 90 wt.%, based on the total weight of the hardcoat, wherein a range from 10 wt.% to 50 wt.% of the nanoparticles comprise a first group of nanoparticles having an average particle diameter in a range from 2 nm to 200 nm, and in a range from 50 wt.% to about 90 wt.% of the nanoparticles comprise a second group of nanoparticles having an average particle diameter in a range from 60 nm to 400 nm, based on the total weight of nanoparticles in the hardcoat, and having a ratio of the average particle size of the first group of nanoparticles to the average particle size of the second group of nanoparticles are in a range from 1:2 to 1:200;
a layer comprising SiOₓC_{y}, where 0<x<2 and 0<y<1; and
a hydrophilic layer.

2. The article of claim 1, further comprising a primer layer between the substrate and the hardcoat layer.

3. The article of any preceding claim, wherein the binder comprises at least one of cured (meth)acrylic oligomer or monomer.

4. The article of any preceding claim, wherein the binder is present in a range from 5 wt.% to 60 wt.%, based on the total weight of the hardcoat.

5. The article of any preceding claim, wherein the hardcoat comprise at least one silicone (meth)acrylate additive.

6. The article of claim 5, wherein the at least one silicone (meth)acrylate additive is present in an amount in a range from 0.01 wt.% to 10 wt.%, based on the total weight of the hardcoat layer.

7. The article of any preceding claim, wherein the nanoparticles are at least one of SiO₂ nanoparticles, ZnO nanoparticles, ZrO₂ nanoparticles, indium-tin-oxide nanoparticles, or antimony-doped tin oxide nanoparticles.

8. The article of any preceding claim, wherein the layer comprising SiOₓC_{y} is hydrophilic.

9. The article of any preceding claim, wherein the hydrophilic layer comprises a silane coupling agent having at least one of zwitterionic or polyethylene glycol functionality.

10. A method of making the article of any preceding claim, comprising:
providing a substrate with the hardcoat thereon, and in turn, the layer comprising SiOₓC_{y}; on the hardcoat; and
applying the hydrophilic layer on the layer comprising SiOₓC_{y}.

11. The method of claim 10, further comprising, providing the layer comprising SiOₓC_{y} via plasma-enhanced chemical vapor deposition, wherein the plasma is formed from 1,1,3,3-tetramethyldisiloxane and oxygen gas or hexamethyledisiloxane and oxygen gas.

12. The method of either claim 10 or 11, further comprising, providing the hardcoat layer via:
depositing a layer comprising uncured binder and a mixture of nanoparticles in a range from 60 wt.% to 90 wt.%, based on the total weight of the hardcoat, wherein a range from 10 wt.% to 50 wt.% of the nanoparticles comprise a first group of nanoparticles having an average particle diameter in a range from 2 nm to 200 nm, and in a range from 50 wt.% to about 90 wt.% of the nanoparticles comprise a second group of nanoparticles having an average particle diameter in a range from 60 nm to 400 nm, based on the total weight of nanoparticles in the hardcoat, and having a ratio of the average particle size of the first group of nanoparticles to the average particle size of the second group of nanoparticles are in a range from 1:2 to 1:200; and
curing the binder.

13. The method of claim 12, wherein the uncured binder comprises at least one silicone (meth)acrylate additive.

14. The method of any of claims 10 to 12, further comprising, providing the hydrophilic layer via depositing a hydrophilic composition comprising alcoxy silane.

15. The method of claim 14, wherein the composition further comprises a silane coupling agent having at least one of zwitterionic or polyethylene glycol functionality.

## Patentansprüche

1. Ein Artikel, umfassend, der Reihe nach:
ein Substrat;
eine Hartbeschichtung, umfassend:
ein Bindemittel; und
eine Mischung von Nanoteilchen in einem Bereich von 60 Gew.-% bis 90 Gew.-%, bezogen auf das Gesamtgewicht der Hartbeschichtung, wobei ein Bereich von 10 Gew.-% bis 50 Gew.-% der Nanoteilchen eine erste Gruppe von Nanoteilchen mit einem durchschnittlichen Teilchendurchmesser in einem Bereich von 2 nm bis 200 nm umfasst, und ein Bereich von 50 Gew.-% bis etwa 90 Gew.-% eine zweite Gruppe von Nanoteilchen mit einem durchschnittlichen Teilchendurchmesser in einem Bereich von 60 nm bis 400 nm umfasst, basierend auf dem Gesamtgewicht der Nanoteilchen in der Hartbeschichtung, und mit einem Verhältnis der durchschnittlichen Teilchengröße der ersten Gruppe von Nanoteilchen zu der durchschnittlichen Teilchengröße der zweiten Gruppe von Nanoteilchen in einem Bereich von 1:2 bis 1:200;
eine Schicht umfassend SiOₓC_{y}, wobei 0<x<2 und 0<y<1; und
eine hydrophile Schicht.

2. Der Artikel nach Anspruch 1, ferner umfassend eine Grundierungsschicht zwischen dem Substrat und der Hartbeschichtungsschicht.

3. Der Artikel nach einem der vorstehenden Ansprüche, wobei das Bindemittel mindestens eines von gehärtetem (Meth)acryloligomer oder -monomer umfasst.

4. Der Artikel nach einem der vorstehenden Ansprüche, wobei das Bindemittel in einem Bereich von 5 Gew.-% bis 60 Gew.-%, bezogen auf das Gesamtgewicht der Hartbeschichtung, vorhanden ist.

5. Der Artikel nach einem der vorstehenden Ansprüche, wobei die Hartbeschichtung mindestens ein Silikon(meth)acrylat-Additiv umfasst.

6. Der Artikel nach Anspruch 5, wobei das mindestens eine Silikon(meth)acrylat-Additiv in einer Menge in einem Bereich von 0,01 Gew.-% bis 10 Gew.-%, bezogen auf das Gesamtgewicht der Hartbeschichtungsschicht, vorhanden ist.

7. Der Artikel nach einem der vorstehenden Ansprüche, wobei die Nanoteilchen mindestens eins der Folgenden sind: SiO₂-Nanoteilchen, ZnO-Nanoteilchen, ZrO₂-Nanoteilchen, Indium-Zinnoxid-Nanoteilchen oder Antimondotierte Zinnoxid-Nanoteilchen.

8. Der Artikel nach einem der vorstehenden Ansprüche, wobei die Schicht, die SiOxCy umfasst, hydrophil ist.

9. Der Artikel nach einem der vorstehenden Ansprüche, wobei die hydrophile Schicht einen Silan-Haftvermittler mit mindestens einer zwitterionischen oder Polyethylenglykol-Funktionalität umfasst.

10. Ein Verfahren zum Herstellen des Artikels nach einem der vorstehenden Ansprüche, umfassend:
Bereitstellen eines Substrats mit der darauf befindlichen Hartbeschichtung, wobei die Schicht wiederum SiOₓC_{y} umfasst; auf der Hartbeschichtung; und
Aufbringen der hydrophilen Schicht auf der Schicht, die SiOₓC_{y} umfasst.

11. Das Verfahren nach Anspruch 10, ferner umfassend das Bereitstellen der Schicht, die SiOₓC_{y} umfasst, mittels plasmaverstärkter chemischer Gasphasenabscheidung, wobei das Plasma aus 1,1,3,3-Tetramethyldisiloxan und Sauerstoffgas oder Hexamethyledisiloxan und Sauerstoffgas gebildet wird.

12. Das Verfahren nach Anspruch 10 oder 11, ferner umfassend das Bereitstellen der Hartbeschichtungsschicht über:
Aufbringen einer Schicht, umfassend ungehärtetes Bindemittel und eine Mischung von Nanoteilchen in einem Bereich von 60 Gew.-% bis 90 Gew.-%, bezogen auf das Gesamtgewicht der Hartbeschichtung, wobei ein Bereich von 10 Gew.-% bis 50 Gew.-% der Nanoteilchen eine erste Gruppe von Nanoteilchen mit einem durchschnittlichen Teilchendurchmesser in einem Bereich von 2 nm bis 200 nm umfasst und ein Bereich von 50 Gew.-% bis etwa 90 Gew.-% eine zweite Gruppe von Nanoteilchen mit einem durchschnittlichen Teilchendurchmesser in einem Bereich von 60 nm bis 400 nm umfasst, basierend auf dem Gesamtgewicht der Nanoteilchen in der Hartbeschichtung, und mit einem Verhältnis der durchschnittlichen Teilchengröße der ersten Gruppe von Nanoteilchen zu der durchschnittlichen Teilchengröße der zweiten Gruppe von Nanoteilchen in einem Bereich von 1:2 bis 1:200; und
Aushärten des Bindemittels.

13. Das Verfahren nach Anspruch 12, wobei das ungehärtete Bindemittel mindestens ein Silikon(meth)acrylat-Additiv umfasst.

14. Das Verfahren nach einem der Ansprüche 10 bis 12, ferner umfassend das Bereitstellen der hydrophilen Schicht über das Abscheiden einer hydrophilen Zusammensetzung, die Alkoxysilan umfasst.

15. Das Verfahren nach Anspruch 14, wobei die Zusammensetzung ferner einen Silan-Haftvermittler mit mindestens einer zwitterionischen oder Polyethylenglykol-Funktionalität umfasst.

## Revendications

1. Article comprenant, dans l'ordre :
un substrat ;
un revêtement dur comprenant :
un liant ; et
un mélange de nanoparticules dans une plage allant de 60 % en poids à 90 % en poids, sur la base du poids total du revêtement dur, dans lequel une plage allant de 10 % en poids à 50 % en poids des nanoparticules comprennent un premier groupe de nanoparticules présentant un diamètre moyen de particule dans une plage allant de 2 nm à 200 nm, et dans une plage allant de 50 % en poids à environ 90 % en poids des nanoparticules comprennent un deuxième groupe de nanoparticules présentant un diamètre moyen de particule dans une plage allant de 60 nm à 400 nm, sur la base du poids total de nanoparticules dans le revêtement dur, et ayant un rapport de la taille de particule moyenne du premier groupe de nanoparticules à la taille de particule moyenne du deuxième groupe de nanoparticules sont dans une plage allant de 1:2 à 1:200 ;
une couche comprenant SiOₓC_{y}, où 0<x<2 et 0<y<1 ; et
une couche hydrophile.

2. Article selon la revendication 1, comprenant en outre une couche de fond entre le substrat et la couche de revêtement dur.

3. Article selon l'une quelconque des revendications précédentes, dans lequel le liant comprend au moins l'un d'un oligomère ou d'un monomère (méth)acrylique durci.

4. Article selon l'une quelconque des revendications précédentes, dans lequel le liant est présent dans une plage allant de 5 % en poids à 60 % en poids, sur la base du poids total du revêtement dur.

5. Article selon l'une quelconque des revendications précédentes, dans lequel le revêtement dur comprend au moins un additif de (méth)acrylate de silicone.

6. Article selon la revendication 5, dans lequel l'au moins un additif de (méth)acrylate de silicone est présent en une quantité dans une plage allant de 0,01 % en poids à 10 % en poids, sur la base du poids total de la couche de revêtement dur.

7. Article selon l'une quelconque des revendications précédentes, dans lequel les nanoparticules sont au moins l'une parmi des nanoparticules de SiO₂, des nanoparticules de ZnO, des nanoparticules de ZrO₂, des nanoparticules d'oxyde d'indium-étain ou des nanoparticules d'oxyde d'étain dopé à l'antimoine.

8. Article selon l'une quelconque des revendications précédentes, dans lequel la couche comprenant SiOₓC_{y} est hydrophile.

9. Article selon l'une quelconque des revendications précédentes, dans lequel la couche hydrophile comprend un agent de couplage au silane ayant au moins l'une parmi une fonctionnalité zwitterionique ou une fonctionnalité polyéthylène glycol.

10. Procédé de fabrication de l'article selon l'une quelconque des revendications précédentes, comprenant :
la fourniture d'un substrat avec le revêtement dur sur celui-ci, et à son tour, la couche comprenant SiOₓC_{y} ; sur le revêtement dur ; et
l'application de la couche hydrophile sur la couche comprenant SiOₓC_{y}.

11. Procédé selon la revendication 10, comprenant en outre, la fourniture de la couche comprenant SiOₓC_{y} par dépôt chimique en phase vapeur assisté par plasma, dans lequel le plasma est formé de 1,1,3,3-tétraméthyldisiloxane et d'oxygène gazeux ou d'hexaméthyldisiloxane et d'oxygène gazeux.

12. Procédé selon la revendication 10 ou 11, comprenant en outre, la fourniture de la couche de revêtement dur via :
le dépôt d'une couche comprenant le liant non durci et un mélange de nanoparticules dans une plage allant de 60 % en poids à 90 % en poids, sur la base du poids total du revêtement dur, où une plage allant de 10 % en poids à 50 % en poids des nanoparticules comprennent un premier groupe de nanoparticules présentant un diamètre moyen de particule dans une plage allant de 2 nm à 200 nm, et une plage allant de 50 % en poids à environ 90 % en poids des nanoparticules comprennent un deuxième groupe de nanoparticules présentant un diamètre moyen de particule dans une plage allant de 60 nm à 400 nm, sur la base du poids total de nanoparticules dans le revêtement dur, et ayant un rapport de la taille de particule moyenne du premier groupe de nanoparticules à la taille de particule moyenne du deuxième groupe de nanoparticules situé dans une plage allant de 1:2 à 1:200 ; et
le durcissement du liant.

13. Procédé selon la revendication 12, dans lequel le liant non durci comprend au moins un additif (méth)acrylate de silicone.

14. Procédé selon l'une quelconque des revendications 10 à 12, comprenant en outre, la fourniture de la couche hydrophile par le dépôt d'une composition hydrophile comprenant un alcoxysilane.

15. Procédé selon la revendication 14, dans lequel la composition comprend en outre un agent de couplage au silane ayant au moins l'une parmi une fonctionnalité zwitterionique ou une fonctionnalité polyéthylène glycol.
